(19) Europäisches Patentamt / European Patent Office / Office européen des brevets

(11) **EP 3 100 041 B1**

(12) **EUROPEAN PATENT SPECIFICATION**

(45) Date of publication and mention
of the grant of the patent:
**09.10.2024  Bulletin 2024/41**

(21) Application number: **15701762.5**

(22) Date of filing: **26.01.2015**

(51) International Patent Classification (IPC):
**G01N 29/24** *(2006.01)*      **G01N 29/30** *(2006.01)*
**G01N 29/44** *(2006.01)*

(52) Cooperative Patent Classification (CPC):
**G01N 29/4463; G01N 29/2487; G01N 29/30;**
G01N 2291/044; G01N 2291/056

(86) International application number:
**PCT/EP2015/051515**

(87) International publication number:
**WO 2015/113939 (06.08.2015 Gazette 2015/31)**

(54) **DEVICE AND METHOD FOR THE NON-DESTRUCTIVE TESTING OF A TEST OBJECT BY MEANS OF ULTRASOUND IN ACCORDANCE WITH THE REFERENCE BODY METHOD**

VORRICHTUNG UND VERFAHREN ZUR ZERSTÖRUNGSFREIEN PRÜFUNG EINES TESTOBJEKTS MITTELS ULTRASCHALL IN ÜBEREINSTIMMUNG MIT DEM BEZUGSKÖRPERVERFAHREN

DISPOSITIF ET PROCÉDÉ POUR LE CONTRÔLE NON DESTRUCTIF D'UN OBJET À TESTER AU MOYEN D'ULTRASONS CONFORMÉMENT AU PROCÉDÉ DU CORPS DE RÉFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2014  DE 102014101229**
**07.04.2014  DE 102014104914**

(43) Date of publication of application:
**07.12.2016  Bulletin 2016/49**

(73) Proprietor: **Baker Hughes Digital Solutions GmbH**
**50354 Hürth (DE)**

(72) Inventor: **KLEINERT, Wolf**
**22926 Huerth (DE)**

(74) Representative: **Novagraaf Group**
**Chemin de l'Echo 3**
**1213 Onex / Geneva (CH)**

(56) References cited:
**US-A- 3 724 262**      **US-A- 3 908 439**
**US-A- 4 462 082**      **US-A- 5 511 425**
**US-A1- 2012 024 067**   **US-A1- 2013 291 640**

• **DEUTSCH V ET AL: "Fehlernachweis und Gerätejustierung", ULTRASCHALLPRUEFUNG: GRUNDLAGEN UND INDUSTRIELLE ANWENDUNGEN, XX, XX, 1 January 1997 (1997-01-01), pages 125 - 135, XP002279059**

**Description**

The subject matter of the present invention is a device and a method for the non-destructive testing of a test object by means of ultrasound, the device, or the method, being configured for characterizing flaws or discontinuities in the material of a test object in accordance with the reference body method. In particular, the device or the method is provided for recording an angle-specific and test probe-specific DAC curve for a test object to be examined in order to then examine it for flaws or discontinuities in accordance with the reference body method.

US 2013/0291640 A1 discloses an industrial ultrasonic inspection system capable of scanning for discontinuities in thick solid objects. Discontinuity size and position is correlated with an equivalent reflector size (ERS) by the Distance-Gain-Size (DGS) method. US 2012/024067 A1, US 4 462 082 A, DEUTSCH et al.: "Fehlernachweis und Geräteustierung", XP002279059, US 5 511 425 A, US 3 908 439 A and US 3 724 262 A disclose ultrasonic inspection. US 2012/024067 A1 discloses non-desctructive testing of an object by way of ultrasound, wherein DGS diagrams are used to determine the ERS (equivalent reflector size) value of a flaw from the echo signals reflected by the flaw; a general DGS diagram, which was determined for a specific insonification angle, is converted for other (electronically adjusted) insonification angles.

The so-called reference body method is a method for the quantitative assessment of flaws or discontinuities in the material of a test object that is common particularly in the U.S. It is based on a comparison of the echo indication stemming from a flaw or a discontinuity with the amplitude of a reference reflector irradiated with sound in a defined manner. In practice, cross bores with a defined diameter inserted with different depths into a reference body are used as reference reflectors. In this case, the reference body consists of a material that is as similar in its acoustic properties to the test object material as possible. These acoustic properties are in this case dependent, for example, on the material, that is, on the type of steel used, the manufacturing process and the thermal treatment, for example. Before carrying out the actual testing task, a so-called angle-specific and test probe-specific DAC curve (DAC = "distance amplitude correction"), in which gain is plotted as a function of the travel time required to bring the echo signals of the identical reference reflectors situated at different depths, i.e. generally cross bores, to a predetermined height, e.g. 80% of the maximum indication height, always has to be recorded within the context of the reference body method for each desired insonification angle or each test probe to be used. From the drop in the echo height of a selected reference reflector depending on its distance from the test probe, a distance-dependent, i.e. travel time-dependent, gain factor TCG ("time corrected gain") can be determined that can be applied so that identical cross bores always cause the same echo indication independently of their respective distance from the test probe. It can be automatically applied, when carrying out the testing task, to the experimentally determined echo signals.

The reference body method was introduced into a variety of testing standards, e.g. into U.S. testing standards published by ASME, ASTM and AWS, all of which demand the recording of a DAC curve. More information on the reference body method is presented, for example, in the standard work Krautkrämer J., Krautkrämer H., Werkstoffprüfung mit Ultraschall, Springer Verlag, 5th edition (1986) in the passages relating to the entry "reference body" listed in the index.

What is advantageous in the reference body method is that experimental effects, which, in principle, could generate uncertainties, such as a frequency-dependent sound attenuation in the test object, have no effect due to the experimentally determined DAC curve. A disadvantage, however, is the enormous effort required for recording the necessary DAC curve(s), which may be on the same order of magnitude as the actual testing task.

This disadvantage is avoided by the so-called DGS method (DGS = distance, gain, size), which was developed in Europe in the late fifties of the 20th century. It, too, is a method for the quantitative assessment of flaws or discontinuities in the material of a test object and is based on a comparison of the echo indication stemming from a flaw or a discontinuity with the amplitude of a reference reflector irradiated with sound in a defined manner. In practice, the perpendicularly sound-irradiated circular disk reflector is used, whose distance-dependent echo amplitude can be theoretically determined at least for the far field of the ultrasonic transducer used for generating the ultrasound. In practice, at least one calibration measurement on a reference reflector, which is introduced into a reference body and can consist, for example, of a circular-arc shaped back face of the reference body (so-called "reference body No. 1") is required in order to determine the gain factor that must be applied in order to bring the echo amplitude of this reference reflector to a defined indication height, e.g. 80% of the maximum indication height. A DGS curve, which is determined in advance, is often stored in a storage unit of the testing device used and is specific to the test probe and the selected insonification angle, is calibrated with it. A DGS curve indicates the distance-dependent course of the gain factor which has to be set in order to bring the echo of a reference reflector with a certain size D to the height of the back-face echo, with the size D, in the case of circular disk reflectors as reference reflectors, corresponding to their diameter. A DGS diagram in turn comprises a plurality of DGS curves for reference reflectors of different sizes D.

Within the context of the DGS method, a detected flaw or a detected discontinuity is also quantitatively characterized by means of a comparison with the size of a circular disk reflector that supplies a flaw indication with an equivalent echo amplitude. The size of such a circular disk reflector is referred to as the "equivalent reflector size" (ERS) of the flaw / discontinuity to be characterized. Theoretically, other reference reflectors, e.g. cross bores, can be used in the work. However, this is unusual.

The flaw sizes / ERS values determined by means of the DGS method are again comparable only under strict conditions with the actual flaw size or the size of a discontinuity as it can be determined by destructive testing. Nevertheless, it was introduced into a variety of testing standards, such as the European testing standard EN 583-2:2001.

It is the object of the present invention to propose a method that permits a considerable reduction of the calibration effort required for testing a test object by means of ultrasound in accordance with the reference body method. Furthermore, it is the object of the invention to propose a device configured for carrying out such a method.

This object is achieved by a method according to claim 7 and by a device according to claim 1. The subclaims relate to advantageous developments of the invention, whose features can be freely combined with each other in any way within the context of what is technically feasible under the scope of the appended claims.

The method according to the invention serves for the non-destructive testing of a test object by means of ultrasound. In this case, the method is configured for characterizing flaws or discontinuities in the material of the test object in accordance with the reference body method. Within the context of the method, ultrasonic pulses with a certain bandwidth B are generated and coupled into a reference body with an oblique insonification at a fixed insonification angle $\Theta$. In this case, the reference body consists of a material that is identical to the material of the test object, or at least acoustically equivalent, i.e. has comparable acoustic properties. Generally, equivalent acoustic properties are provided if the materials are identical, i.e. if it is, for example, the same type of steel, and if the test object and the reference body have been subjected to a comparable processing or heat treatment. This means, in particular, that the longitudinal and transversal sound velocities and the material-specific sound attenuation match in all propagation directions in the test object and in the reference body.

In another method step, echo signals stemming from the reference reflector are recorded from the reference body. Then, the recorded echo signals are processed in such a way that an insonification angle-specific DAC curve for the reference body, and thus for the test object, is determined based on a general DAC curve. This takes place by adapting the general DAC curve to the echo signal of the reference reflector.

Within the context of the present invention, a general DAC curve is understood to be a DAC curve that is specific to the ultrasonic test probe employed for generating the ultrasonic pulses used, to the acoustic properties of the test object material or of the reference body, as well as, in general, to the insonification angle $\Theta$. A method is indicated below with which it is possible to determine such a general DAC curve on the basis of theoretical considerations. As a result, a function f is obtained that describes the general DAC curve, and which is provided at least in a numerical form.

However, depending on the calculation method used, the function f can also be provided in an analytical form, wherein it may depend, as a rule, on various parameters such as the sound velocity in the material of the test object or the reference body, the insonification angle $\Theta$, the geometric dimensions of the reference reflector, a correction factor for taking into account the transfer correction, as well as other correction factors for taking into account the geometric or material-specific sound attenuation in the material of the test object or the reference body.

In its simplest form, the adaptation to be carried out according to the invention of the general DAC curve to the echo signal of the reference reflector is comprised of a parallel shift of the general DAC curve in the Y direction in such a way that the measured point obtained on the reference reflector of the reference body comes to lie on the DAC curve shifted parallel. This corresponds to an adaptation to the individual sensitivity of the test probe used. Furthermore, a shift in the X direction may make sense in order to take into account the change of the delay length generally occurring when the insonification angle of a phased array test probe is changed. If so-called trueDGS® test probes are used, which will be discussed in more detail below, the change of the delay length occurring during a change of the insonification angle is tabulated and can be automatically taken into account in a simple manner.

Alternatively, it is possible to use one of the above-mentioned parameters on which the general DAC curve may depend as a fitting parameter and adapt it in such a way that the resulting special insonification angle-specific DAC curve runs through the measured point obtained on the reference reflector of the reference body.

The proposed way of proceeding provides a very substantial relief for an examiner when carrying out a testing task according to the reference body method, because the hitherto required considerable effort for recording a material-specific, insonification angle-specific and test probe-specific DAC curve for the test object is in essence reduced to recording a single echo signal from a reference reflector in the reference body in order to take into account the individual sensitivity of the test probe used. This applies particularly if a test probe that permits the insonification angle $\Theta$ to be adjusted is used for generating and insonifying the ultrasound. In particular so-called "phased array" test probes having a plurality of individually controllable transducer segments permit an electronic adjustment of the insonification angle $\Theta$. By a specific selection and phase-accurate control of the transducer segments, it is possible to electronically adjust essential ultrasound parameters, such as near-field length, transmission aperture, focus position and size as well as the insonification angle $\Theta$.

Prior to a specific testing task, a general DAC curve is determined for this purpose which takes into account both the material properties of the test object or reference body as well as the insonification angle $\Theta$ and the properties of the test probe used. This general DAC curve is valid for any insonification angle $\Theta$. It is recorded by subjecting at least one, preferably at least two and particularly preferably a plurality of identical reference reflectors spaced at different distances from the test probe to a measurement at a fixed insonification angle $\Theta$. Then, a DAC curve specific to the selected insonification angle is adapted to these experimentally obtained echo signals. From this insonification angle-specific DAC curve, a general DAC curve can then be obtained by calculation. Given the computing power available at the time this application was filed, carrying out this method is possible within a short time even by means of personal computers. A general DAC curve that was theoretically determined in this manner prior to a testing task can then be transferred into the device used for carrying out the testing task. However, the testing device used can of course also be configured for determining a general DAC curve on the basis of inputs by an examiner that relate to the test probe used, the properties of the test object and the insonification angle $\Theta$ used.

In a preferred development of the method according to the invention, a plurality of, particularly at least two, reference reflectors that have different distances from the test probe are measured at a fixed insonification angle $\Theta$ in order to determine an insonification angle-specific DAC curve for the test object. Then, the general DAC curve is adapted to the echo signals thus obtained, which preferably stem from identically dimensioned reference reflectors. Already the measurement of two reference reflectors permits taking into account the material-specific sound attenuation. In addition to the individual sensitivity of the test probe used, a factor F for the material-specific sound attenuation can be used as a fitting parameter. If more than two reference reflectors are measured, then this again improves the accuracy of the adaptation made, and thus the reliability of the DAC curve determined on the basis of the adaptation. In addition, the tabulated values for the insonification angle-specific delay length can be used in the case of the trueDGS® test probes.

If the one or the several reference reflectors inserted into the reference body are configured as cross bores, this results in the special advantage that various American testing standards require the use of the reference body method for ultrasonic testing, with cross bores in the reference body being prescribed as reference reflectors. In this configuration, the method according to the invention can advantageously be used directly within the context of the testing methods prescribed by the U.S. testing standards cited above.

The basic principle that applies is that a particularly good match of the theoretically calculated DAC curves with the experimental results is obtained if the frequency-dependent amplitude distribution of the ultrasonic test pulses used is used as a basis. For this purpose, a Gaussian-shaped frequency distribution with a test probe-specific bandwidth B and an also test probe-specific center frequency $f_0$ can be taken as a basis in practice. This means that the general DAC curve, on which the method according to the invention is based, is generally specific to the bandwidth B of the coupled-in ultrasonic pulses. From this it follows directly that the determined insonification angle-specific DAC curve is generally also specific to the bandwidth B of the coupled-in ultrasonic pulses.

An even higher level of correspondence with experimentally determined echo values on reference reflectors can be obtained if, furthermore, the polarization of the ultrasonic pulses is also taken into account in the determination of the general DAC curve for the geometry of the selected reference reflector. This means that the general DAC curve used as a basis for the method is specific to the polarization P of the coupled-in ultrasonic pulse, from which it follows directly that the insonification angle-specific DAC curve is generally also dependent on the polarization of the coupled-in ultrasonic pulses.

The basic principle that applies is that the theoretical determination of the general DAC curve is simple if the calculation can be based upon the assumption that the sound field of the ultrasonic pulses incident upon the reference reflector is rotationally symmetric to the propagation direction of the ultrasonic pulses. In a particularly preferred embodiment of the device according to the invention, the device according to the invention, and thus generally the entirety consisting of the ultrasonic test probe and the control unit, is therefore configured to generate a sound field that is rotationally symmetric in the test object. Corresponding, in particular obliquely insonifying, ultrasonic test probes are known from WO 2010/130819 A1 by the applicant, which are sold under the name trueDGS®. From this application, in particular, the manner is apparent in which a single-part transmitting transducer of an obliquely insonifying ultrasonic test probe has to be designed in order to generate a sound field that is rotationally symmetric in the test object. For most testing tasks using the pulse echo technique, an oblique insonification is desirable or even required. Within the context of the present invention, a sound field that is rotationally symmetric in the test object permits a simplified computation of the material-specific or transmitting transducer-specific DGS diagram. It is also clear from WO 2010/130819 A1 that it is possible to generate a sound field that is rotationally symmetric in the test object also by means of phased array technique. For this purpose, selected transducers of a two-dimensional and preferably, but not necessarily, plane array, for example, are controlled by individually controllable transducers in a phase-accurate manner. The control unit is to be configured to be suitable for this purpose. Both options mentioned herein for generating a sound field that is rotationally symmetric in the test object are part of the subject matter of the present invention.

In a particularly preferred development of the method according to the invention, the material-specific, frequency-dependent sound attenuation of the ultrasonic pulses used for testing in the test object or in the reference body is taken into account in the determination of the insonification angle-specific DAC curve for the test object. For this purpose, it may for be provided, for example, that a factor F for the frequency-dependent sound attenuation in the material of the test object is determined from at least two echo signals, which are received from the reference body, of identical reference reflectors that have different distances from the ultrasonic test probe. Details on how such a determination is possible can be seen in the application with the file number 10 2014 101 230 by the applicant of the present application, which was filed with the German Patent and Trademark Office on the same day as the present application, and which is titled "Device and method for the non-destructive testing of a test object by means of ultrasound taking into account the frequency-dependent sound attenuation".

For example, the factor F for the frequency-dependent sound attenuation in the test object material determined in this manner can be directly taken into account in the calculation of the general DAC curve.

Conversely, this means that the general DAC curve in its general form comprises a factor F for the frequency-dependent sound attenuation in the test object. If a practical spectral distribution, for example in the form of a Gaussian function, of the transmission pulses used is taken as a basis, then it is possible, based on the measurement of a limited number of identical reference reflectors that have different distances from the test probe, to determine this frequency-dependent factor F from an adaptation of the DAC curve to the experimentally determined reference echoes.

An alternative approach is that the factor F for the frequency-dependent sound attenuation in the test object is determined with an independent method, with reference again being made to the application titled "Device and method for the non-destructive testing of a test object by means of ultrasound taking into account the frequency-dependent sound attenuation" by the applicant, which was filed on the same date and was already referred to above. If the factor F was determined in this way, which may, for example, take place by measuring two identical reference reflectors with different distances, the influence of the material-specific frequency-dependent sound attenuation in the test object material can be compensated, both while carrying out the method according to the invention as well as while carrying out the specific testing task itself, by calculating corrected spectra, in which the influence of the material-specific frequency-dependent sound attenuation has just about been eliminated by calculation, from the spectrum of the received reference echo using the factor F. The corrected spectra thus obtained can then be inversely transformed into the time domain, whereby corrected echo signals are obtained in which the influence of the material-specific frequency-dependent sound attenuation is no longer included. On the one hand, these corrected echo signals can be used in carrying out the method according to the invention, so that it is no longer necessary to take into account the material-specific frequency-dependent attenuation factor F in the determination of the general DAC curve. On the other hand, the flaw echoes detected within the context of the testing task can be corrected in the same way, so that the influence of the material-specific frequency-dependent sound attenuation is just about compensated.

The device according to the invention is provided for the non-destructive testing of a test object by means of ultrasound, the device being configured for characterizing flaws or discontinuities in the material of the test object in accordance with the reference body method. The device comprises an ultrasonic test probe with an ultrasonic transducer for generating and coupling an ultrasonic field into the test object in oblique insonification at an insonification angle O. Furthermore, the ultrasonic test probe is configured for recording resulting echo signals from the test object, wherein in this case, if necessary, a receiving test probe with preferably identical ultrasonic properties can be used, which is formed separate from the transmitting test probe. Furthermore, the device comprises a control unit for controlling the ultrasonic test probe in such a way that the latter generates ultrasonic pulses with a certain bandwidth B.

Finally, the device according to the invention comprises a receiving unit for recording echo signals by means of the ultrasonic test probe. Further, an evaluation unit is provided which is connected to the evaluation unit and configured for processing the recorded echo signals. In this case, the evaluation unit is configured, in particular, to determine a DAC curve for the test object from at least one echo signal of a reference reflector from a reference body. In this case, the reference body used consists of a material that is identical with or acoustically equivalent to the material of the test object.

Now, according to the invention, the evaluation unit is configured to determine, on the basis of a general DAC curve which can be specific to the test probe used (transducer geometry, insonification angle $\Theta$, center frequency $f_0$, bandwidth B) and the test object material, and which can, in particular, be stored in a storage unit of the evaluation unit, an insonification angle-specific DAC curve for the test object by adaptation of the general DAC curve to the echo signal of the reference reflector.

In advantageous developments, the device according to the invention, in this case particularly the included evaluation unit, is configured for carrying out the above-described advantageous developments of the method according to the invention. Reference is made to the explanations relating thereto.

It was explained in the introduction that DAC curves, within the context of the reference body method mentioned in the introduction, generally relate to cross bores with a diameter $D_z$. With respect to DGS curves, it was explained with regard to the DGS method mentioned in the introduction that they relate to circular disk reflectors with a diameter $D_r$ as reference reflectors. It can be shown that the DGS curve of a circular disk reflector with the diameter $D_r$ has the same distance in the far field from the back-face echo curve as the DAC curve of a cross bore with the diameter $D_z$, if the following condition is satisfied:

$$D_r = \frac{D_s^2}{2\,\lambda\,N_{num}}\sqrt{\frac{\sqrt{2}}{2\,\pi}\sqrt{z\,D_z}}$$

wherein: $\lambda$: wavelength ultrasound

$D_s$: Diameter of the circular ultrasonic transducer used for generating the ultrasound

$N_{num}$: numerical value of the near-field length of the circular ultrasonic transducer used for generating the ultrasound

This also applies to the features of the following exemplary embodiment, from which further features and advantages of the device according to the invention and the method according to the invention become apparent. The exemplary embodiment serves for illustrating the invention to a person skilled in the art and is therefore to be understood as an example, and not to be limiting. It refers to the Figures, which show the following:

Fig. 1: an exemplary embodiment of a device according to the invention,

Fig. 2: the sound pressure of the sound field used, perpendicular to the acoustic axis,

Fig. 3: a calculated DGS curve for a cross bore, taking into account the transverse distribution,

Fig. 4: a screen curve determined therefrom, taking into account the transverse distribution,

Fig. 5: a DGS curve without taking into account the transverse distribution,

Fig. 6: a screen curve determined therefrom, without taking into account the transverse distribution,

Fig. 7: an exemplary evaluation of experimentally determined echo values,

Fig. 8: comparison of two DGS curves without/with sound attenuation correction,

Fig. 9: a screen curve with sound attenuation correction,

Fig. 10: a theoretical sound pressure curve for a cross bore,

Fig. 11: a first experimental example for an adaptation of a theoretical DAC curve to experimental echo values according to the "least square" method,

Fig. 13: a second experimental example for an adaptation of a theoretical DAC curve to experimental echo values according to the "least square" method,

Fig. 14: a first experimental example of screen curves determined based on reference measurements at a single insonification angle $\Theta = 53°$ for deviating insonification angles,

Fig. 15: a second experimental example of screen curves determined based on reference measurements at a single insonification angle $\Theta = 53°$ for deviating insonification angles,

Fig. 16: screen curves for all angles at the same gain setting for the experimental example according to Figure 14, and

Fig. 17: screen curves for all angles at the same gain setting for the experimental example according to Figure 15.

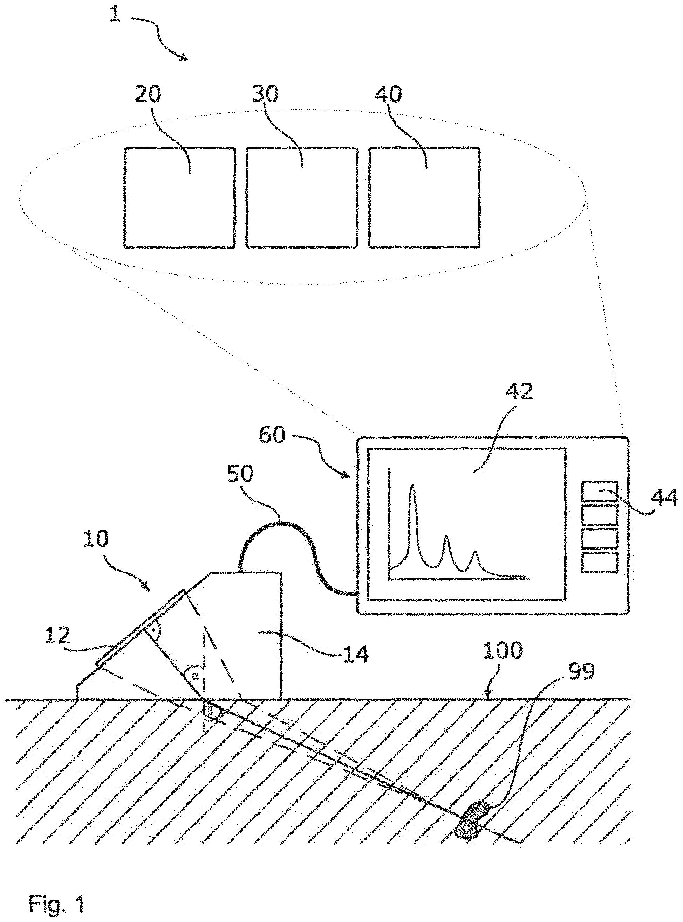

Reference is made to the fact that the terms DGS curve/diagram and DAC curve/diagram are used in an equivalent manner within the context of the exemplary embodiments. Figure 1 shows an exemplary embodiment of a testing device 1 according to the invention for the non-destructive testing of a test object 100 by means of ultrasound. The testing device 1 is configured for characterizing flaws or discontinuities 99 in the material of the test object 100 in accordance with the reference body method, which can be located, in particular, in the near field of an ultrasonic transducer 14 used for generating the ultrasound. The testing device 1 comprises an ultrasonic test probe 10 with a single-part ultrasonic transducer 12 for generating and coupling an ultrasonic field into the test object 100 and for recording resulting echo signals from the test object 100. The test probe 10 is configured for an oblique insonification into the test object 100. To this end, the ultrasonic transducer 12 is disposed on a wedge-shaped leading body 14.

Furthermore, the testing device 1 comprises a control unit 20 for controlling the ultrasonic test probe 10, so that the latter generates a sequence of ultrasonic pulses that have a typical center frequency $f_0$ between 1 and 5 MHz and a bandwidth typically between 20 and 40%. The pulse sequence frequency typically lies in the range of a few kHz. The control unit 20 is connected to the test probe 10, and in particular to the ultrasonic transducer 12 thereof.

Furthermore, a receiving unit 30 is provided for recording echo signals by means of the ultrasonic test probe 10. The receiving unit 30 is also connected to the test probe 10, and in particular to the ultrasonic transducer 12 thereof.

Finally, an evaluation unit 40 connected both to the control unit 20 and to the receiving unit 30 is provided, which is configured for processing the echo signals from the material of the test object 100 recorded by the ultrasonic transducer 12 of the test probe 10. The evaluation unit 40 is connected to a display device 42 in the form of an LCD or an OLED, on which the amplitude of the received echo signals, for example, can be displayed in a time-resolved manner (A scan), particularly with the application of the DAC curve determined according to the invention, i.e. of the travel time-dependent gain factor determined according to the invention.

The evaluation unit 40 is configured for carrying out the method according to the invention in various forms, which will be discussed in more detail below. In this case, the method can be implemented in the control unit 20, the evaluation unit 40 or in a higher-level control unit which is part of the device 1.

The control unit 20, the receiving unit 30 as well as the evaluation unit 40 including the display device 42 are accommodated in a common ultrasound control device 50, which is connected via a communication line 60 to the test probe 10.

In an alternative embodiment, the control unit 20, the receiving unit 30 and the evaluation unit 40 can be integrated separately or jointly and partially or completely into the test probe 10.

The ultrasonic test probe 10 is configured according to WO 2010/130819 A1, so that it generates a sound field that is rotationally symmetric to the acoustic axis in the test object 100. For this purpose, an only approximately circular and non-planar ultrasonic transducer is generally required, whose "diameter" is hereinafter designated D. In the context of the present invention, the diameter D of the transmitting transducer can in such a case be assumed to be the diameter of a circular transmitting transducer of the same surface area.

The evaluation unit 40 is configured for normalizing, relative to the echo amplitude of at least one selected reference reflector, the amplitude of echo signals received from the test object, on the basis of a DAC curve determined within the context of a suitable calibration method. The echo amplitude of that reference reflector is generally determined on a reference body separate from the test object.

A possible approach for theoretically determining the sound pressure on the acoustic axis for pulsed sound is based on considerations regarding the sound pressure of a circular transmitting transducer with the diameter D for continuous sound. In order to simplify matters, reference is made here to the considerations apparent from the German patent application by the same applicant with the title "Device and method for the non-destructive testing of a test object by means of ultrasound in accordance with the DGS method", which was filed on the same day, particularly the equations 1 to 25 therein, which are used as a basis for calculating the DGS diagram both for continuous sound and for pulsed sound of a circular disk reflector. In this case it is necessary to take into account the deviating geometry of the reflector (cross bore instead of circular disk).

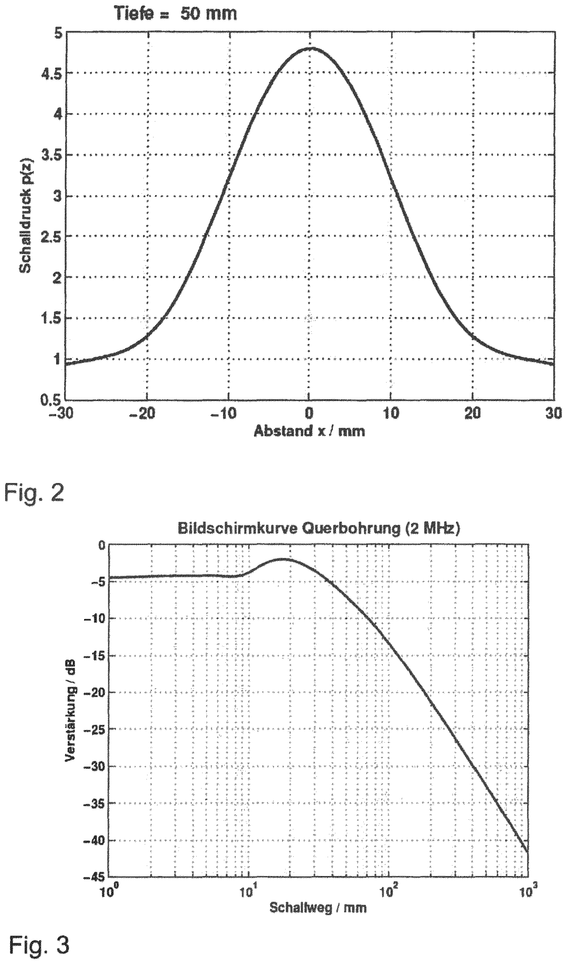

In order to calculate a DGS curve for cross bores, the sound pressure distribution perpendicular to the acoustic axis has to be calculated for each sound path first. Figure 2 shows an example of the sound pressure distribution of a 2-Mhz test probe in the case of a sound path of 50 mm. Let p(z,y) be the sound pressure distribution in the case of a sound path z and a distance y from the acoustic axis. In order to calculate the DGS curve, equation (25) of the referenced patent application "Device and method for the non-destructive testing of a test object by means of ultrasound in accordance with the DGS method" must then be modified in accordance with the transverse distribution and the distance law for cross bores.

The decrease of the sound pressure from a circular disk as a function of the sound path z follows the following law:

$$\frac{1}{z^2} \quad (1)$$

In contrast, the following applies for cross bores [see Krautkrämer J., Krautkrämer H., Werkstoffprüfung mit Ultraschall, Springer Verlag, 5th edition (1986), page 50]

$$\frac{1}{\sqrt{z}} \tag{2}$$

These conditions yield the following for the calculation of a DGS curve for a cross bore:

$$p_{quer}(z,t) = \int\limits_{x=0}^{\frac{D}{2}} \int\limits_{y=0}^{\frac{D}{2}} \overline{p}(z,y)\, e^{A\left(2z-\sqrt{4z^2+x^2}\right)^2} \frac{x}{\sqrt[4]{4z^2+x^2}} \cos\left(\omega t - k\sqrt{4z^2+x^2}\right) dx\, dy \tag{3}$$

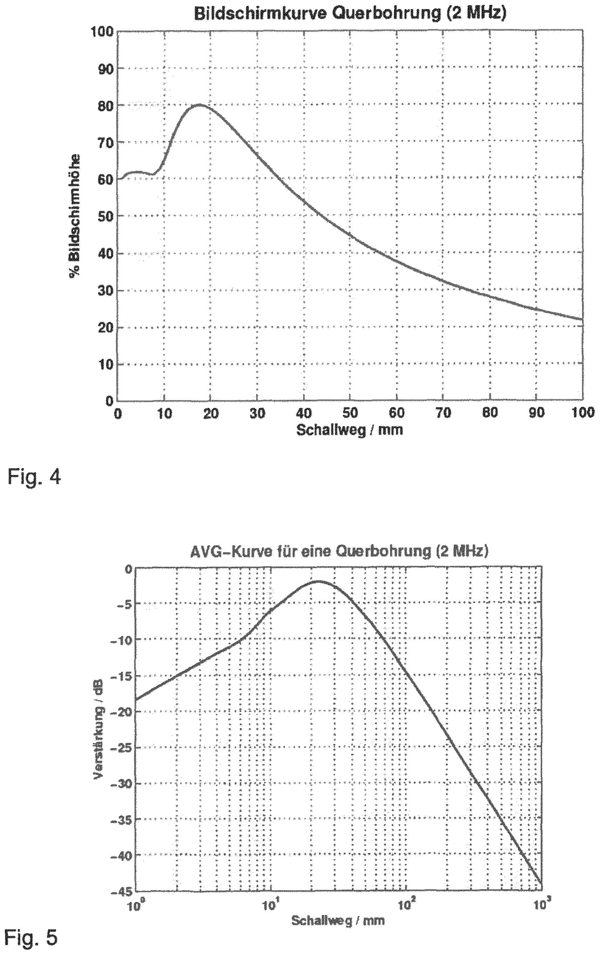

Figure 3 shows the result of this first calculation approach that takes into account the transverse distribution of the sound pressure along the longitudinal axis of the cross bore. Accordingly, a screen curve for the ultrasonic device can be calculated from this, which is shown in Figure 4.

Based on the calculation for circular disk reflectors, the DGS curve is alternatively also calculated without taking into account the transverse distribution of the sound pressure:

$$p_{quer}(z,t) = \overline{p}_A(z) \int\limits_{x=0}^{\frac{D}{2}} \int\limits_{y=0}^{\frac{D}{2}} e^{A\left(2z-\sqrt{4z^2+x^2}\right)^2} \frac{x}{\sqrt[4]{4z^2+x^2}} \cos\left(\omega t - k\sqrt{4z^2+x^2}\right) dx\, dy \tag{4}$$

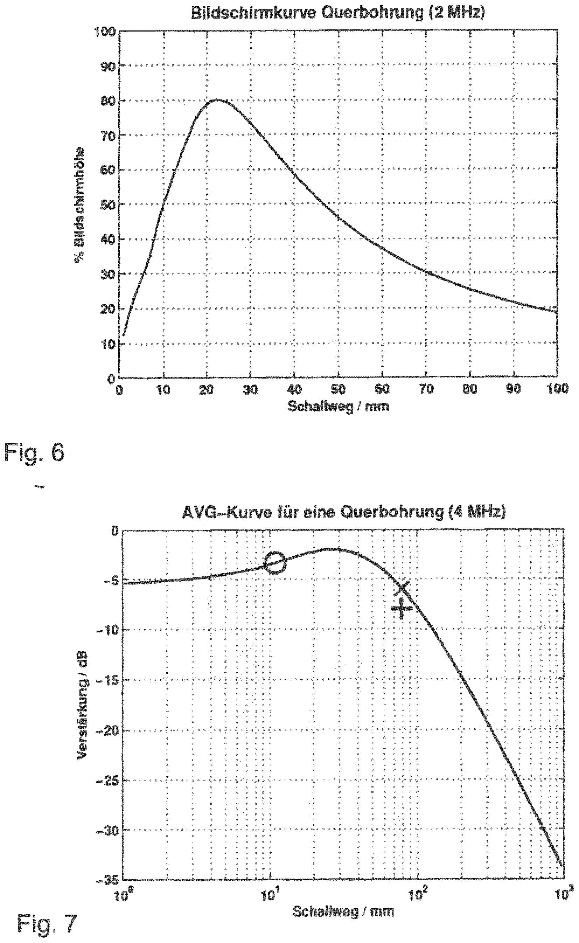

If applicable, Deff = 0.97 D is used. This DGS curve is shown in Figure 5. Also in this case, a screen curve for the ultrasonic device can again be calculated from this, which is shown in Figure 6. It is found that already the simplified latter calculation yields a sufficient accuracy. Therefore, the evaluation is therefore continued based on the calculation without the transverse distribution.

The evaluation unit 40 is configured for carrying out a first calibration method that can be applied if only one DGS curve (e.g. for a certain insonification angle) should be required. This first calibration method includes the following method steps:

- acoustically irradiating two identical cross bores with sound paths that are as different as possible
- determining the sound paths and the dB value in order to adjust this echo to 80% of the screen height
- calculation of the difference $\Delta G$ of the two dB values

For the sound path $s_1$ of the first measurement, the corresponding point is first plotted on the DGS curve, see the circular marker in Figure 7.

In a further step, a point, which is represented by the plus marker in Figure 7, is plotted into the diagram for the second sound path $s_2$ at the distance $\Delta G$ to the first measured value. For the sound path $s_2$, the distance of this point from the curve is determined, which yields the gain difference $\Delta G_{12}$ (distance between the X marker and the plus marker). In this case, the result for $\Delta G_{12}$ is a value of 2 dB

The specific evaluation of this example is carried out with the following values, which can also be taken from Figure 7:

- First sound path $s_1$ = 10.9 mm
- Second sound path $s_2$ = 79 mm
- Gain difference difference $\Delta G_{12}$ = 2 dB

Thus, the sound attenuation $s_a$ can now be calculated:

$$s_a = \frac{\Delta G_{12}\ 1000}{2(s_2 - s_1)}$$

$$s_a = \frac{2\ dB\ 1000}{2(79\ mm - 10.9\ mm)} = 14,7\ \frac{dB}{m} \quad (5)$$

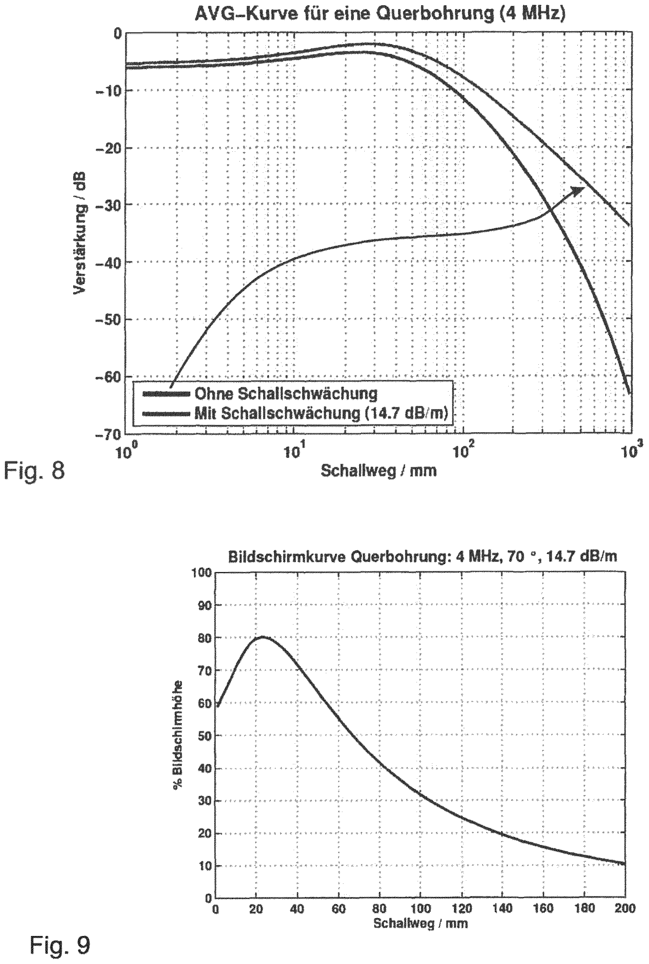

with $s_1$ und $s_2$ in mm and $\Delta G_{12}$ in dB. Using the sound attenuation thus determined, both the DGS curve (see Figure 8) as well as the screen curve (see Figure 9) can be adapted accordingly. With this way of carrying out the method or its implementation in the evaluation unit 40 of the testing device 1, the recording of a DAC curve by means of a plurality of cross bores, which is customary in the prior art and prescribed by relevant testing standards, is reduced to the recording of the echo signals of only two identical reference reflectors that have different distances from the test probe 10 and are in this case configured, by way of example, as cross bores in a reference body.

Further, the evaluation unit 40 is configured for carrying out a second calibration method based on the recording of only a single reference echo from the arc of a circle of a reference body of a type No. 1 reference body. Based on this second calibration method, it is possible, in particular, to determine with only a single calibration measurement angle-specific DAC curves for a phased array if its angle-dependent amplitude correction values are known for all relevant angles.

In that case, the distance $v_{quer}$ from the DGS curve for the cross bore used for calibration to the calculated one of the back-face echo curve has yet to be calculated. The following considerations in this section all relate to the distant far field (very large z).

According to Krautkrämer J., Krautkrämer H., Werkstoffprüfung mit Ultraschall, Springer Verlag, 5th edition (1986), see p. 75, the sound pressure p on the acoustic axis of a circular oscillator is calculated with the formula:

$$p \approx p_0\ \frac{\pi\ D_s^2}{4\ \lambda\ z} \quad (6)$$

with $D_s$: diameter of a circular oscillator

The sound pressure of a cross bore in the far field follows the distance law, with the omission of proportionality factors:

$$\frac{\sqrt{D_z}}{\sqrt{z}} \quad (7)$$

with $D_z$: diameter of the cross bore.

The following proportionality factors are added:

$$\frac{\sqrt{2}\ \sqrt{D_z}}{2\ \lambda\ \sqrt{z}} \quad (8)$$

The product of the equations (6) and (7) thus yields for the resulting sound pressure $p_{quer}$ of a cross bore in the sound field of a circular oscillator:

$$p_{quer} = p_0\ \frac{\pi\ \sqrt{2}\ D_s^2\ \sqrt{D_z}}{8\ \lambda^2\ z^{\frac{3}{2}}} \quad (9)$$

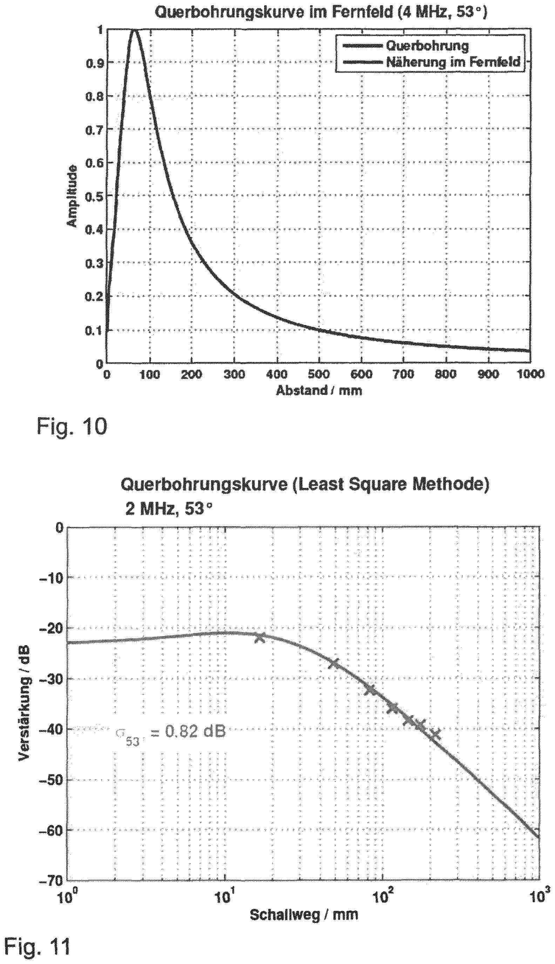

Figure 10 shows the approximation of the cross bore curve by $p_{quer}$.

The sound pressure $p_R$ applies in the far field for the plane back face:

$$pR = p_0 \, \frac{\pi \, N_{num}}{2 \, z}$$

(10)

The ratio of $p_{quer}$ to $p_R$ corresponds to the respective echo amplitudes H:

$$\frac{H_{quer}}{H_R} = \frac{\sqrt{2} \, D_s^2 \, \sqrt{D_z}}{4 \, \lambda^2 \, N_{num} \, \sqrt{z}}$$

(11)

For the shift $v_{quer}$ between the back-face echo curve and the curve of the cross bore in the DGS diagram in the far field, it thus follows:

$$v_{quer} = 20 \, \lg \left( \frac{\sqrt{2} \, D_s^2 \, \sqrt{D_z}}{4 \, \lambda^2 \, N_{num} \, \sqrt{z}} \right)$$

(12)

If the frequency-dependent sound attenuation is additionally determined by means of a suitable method, the measurement of a plurality of reference reflectors, e.g. in the form of cross bores, can be completely dispensed with in the preparation of a DAC curve. A suitable method is described in the further German patent application titled "Device and method for the non-destructive testing of a test object by means of ultrasound taking into account the frequency-dependent sound attenuation" by the applicant, which was filed on the same date and was already referred to in the introduction.

The evaluation unit 40 is further configured to calculate DGS curves for all desired insonification angles $\Theta$ on the basis of the thus determined insonification angle-specific DGS curve based on the known angle-dependency of the phased-array test probe 10 used.

Finally, the evaluation unit 40 is configured to validate the DAC curve(s) thus determined by means of experimentally determined echo amplitudes of a plurality of identical reference reflectors, which, however, have different distances from the test probe.

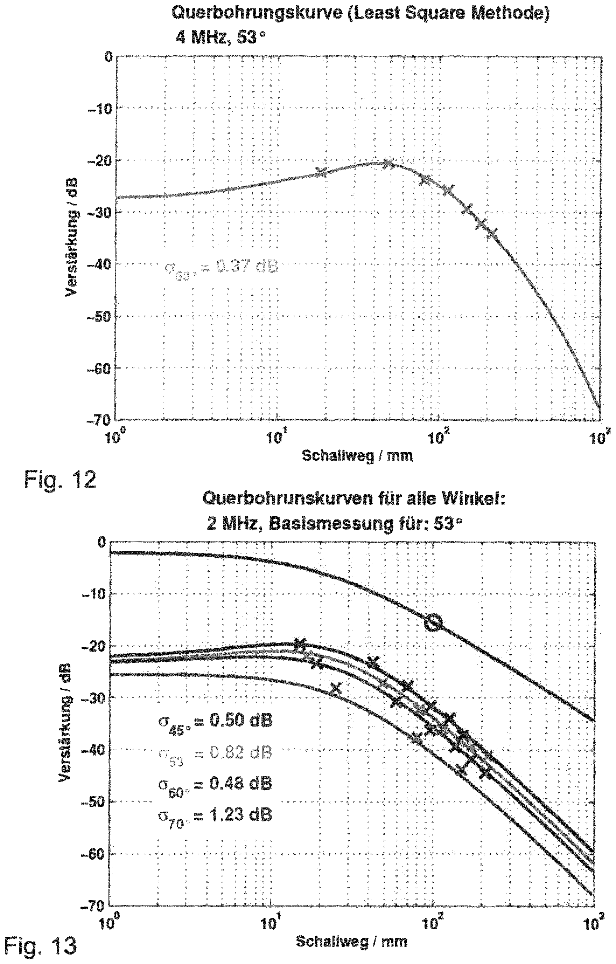

Finally, the evaluation unit 40 is configured for carrying out a fourth calibration method, which is hereinafter referred to as the "least square" method. Within the context of this method, a plurality of identical cross bores, which, however, have different distances from the test probe 10, are measured for a fixed insonification angle. These measured values can be adapted to the calculated cross bore curve using the least square method. In the process, the current frequency-dependent sound attenuation in the test body is calculated and the measured values are shifted in such a way that they lie distributed about the curve with the smallest square flaw distances. The result of this method is shown by way of example in Figures 11 and 12.

The following values are used for the calculation according to the least square method:

- n: number of measured values
- $s_i$: measured sound paths
- $r_i$: dB values for the measured sound paths on the calculated cross bore curve
- $m_i$: measured amplitude values
- a: shall be the sound attenuation
- v: shall be the necessary shift in the y axis

The sum $f$ of the square flaw distances is then calculated by:

$$f = \sum_{i=1}^{n} \left[ r_i - (m_i + 2as_i) + v \right]^2$$

(13)

The two partial derivatives are calculated and equated to zero:

$$\frac{\partial f}{\partial v} = 0$$
$$\frac{\partial f}{\partial a} = 0 \qquad (14)$$

This yields the following system of equations for calculating the necessary shift v and the sound attenuation a:

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n} (r_i - m_i) \\ \sum_{i=1}^{n} s_i (r_i - m_i) \end{pmatrix} \qquad (15)$$

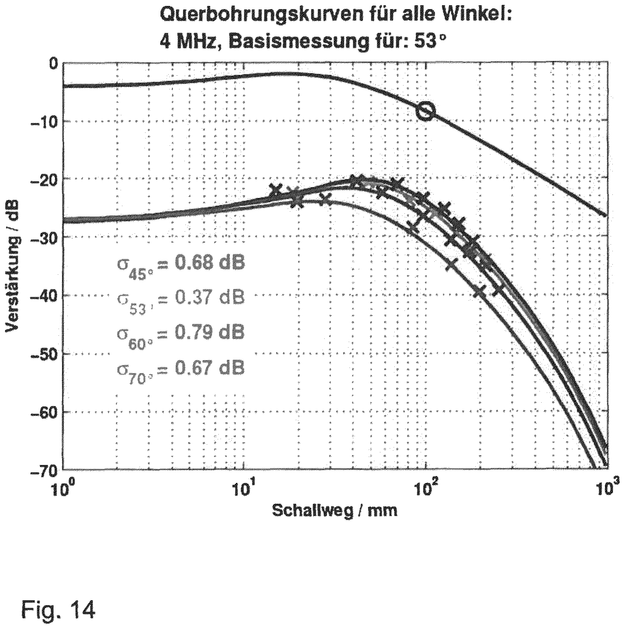

The result of the "least square" method is shown by way of example below. First, seven cross bore echoes were recorded at an angle of 53° (close to the nominal angle) both with a 2-MHz and a 4-Mhz phased-array test probe. In the next step, the cross bore curves were calculated for other angles and shifted in the DGS diagram by the respective angle-dependent sensitivity differences, which are known for the trueDGS® phased-array test probes (see WO2010/130819 A1). The Figures 13 and 14 show the results of this calculation including the values for validation measured for all angles.

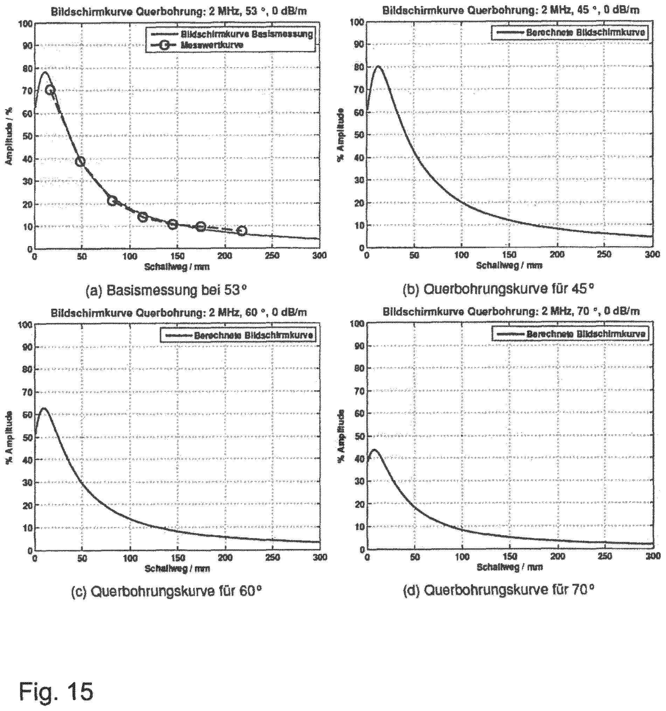

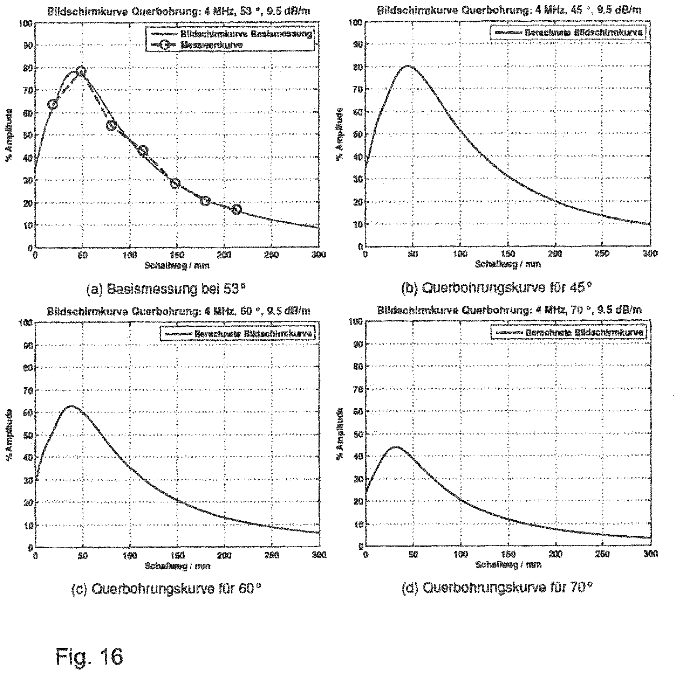

With the same gain setting of the ultrasonic device, Figures 15 and 16 show both the screen curve for the basic measurement at 53° as well as the screen curve determined therefrom for the other insonification angles for the 2-MHz and 4-MHz calculation.

A particularly preferred testing method based on the method according to the invention and, if applicable, the device according to the invention, using a phased-array test probe 10 with an adjustable insonification angle Θ comprises the following method steps: As when using "conventional" transceiver test probes, the examiner measures for a fixed insonification angle Θ a plurality of identical cross bores in a reference body, which, however, have different distances from a test probe. Once two echoes have been recorded, the calculated screen curve can be displayed. The other measurements serve for improving the accuracy. The accuracy of the measurements can be directly assessed by the position of the measured values relative to the calculated screen curve. The other screen curves are then calculated in accordance with the "least square" method as described above. The advantage of this method lies in a good accuracy and in the fact that examiners, as is customary in the reference body method, can proceed in the usual manner with a conventional obliquely insonifying test probe with a fixed insonification angle. It is thus not necessary to retrain using phased-array test probes.

**Reference numerals**

1     Testing device
10    Test probe
12    Ultrasonic transducer
14    Leading body
20    Control unit
30    Receiving unit
40    Evaluation unit
42    Display device
44    Message display panel
50    Ultrasound control device
60    Communication line

99      Flaw, discontinuity

100     Test object

**Claims**

1.  A device (1) for the non-destructive testing of a test object (100) by means of ultrasound, the device (1) being configured for characterizing flaws or discontinuities (99) in the material of the test object (100) in accordance with the reference body method, wherein the device (1) comprises the following:

    a. an ultrasonic test probe (10) with an ultrasonic transducer (12) for generating and coupling an ultrasonic field into the test object (100) in oblique insonification at an insonification angle Θ and for recording resulting echo signals from the test object (100),
    b. a control unit (20) for controlling the ultrasonic test probe (10) in such a way that the latter generates ultrasonic pulses with a certain bandwidth B,
    c. a receiving unit (30) for recording echo signals by means of the ultrasonic test probe (10), and
    d. an evaluation unit (40), which is connected to the receiving unit (30) and configured for processing the recorded echo signals, wherein the evaluation unit (40) is configured to determine an angle specific DAC curve ("distance-amplitude-correction") for the test object (100) from a plurality of echo signals of identical reference reflectors from a reference body, wherein the reference body consists of a material that is identical with or acoustically equivalent to the material of the test object (100), wherein
    e. the evaluation unit (40) is configured to determine, on the basis of a general DAC curve in which gain is plotted as a function of the travel time required to bring the echo signals of the identical reference reflectors situated at different depths to a predetermined echo indication height specific to the ultrasonic test probe (10), the acoustic properties of the material of the test object (100) and the reference body and the insonification angle Θ, an insonification angle-specific DAC curve, and
    wherein in order to determine the insonification angle-specific DAC curve, the evaluation unit (40) is configured for carrying out a calibration by adapting measured values of a plurality of identical cross bores which have different distances from the test probe (10) and are measured for a fixed insonification angle using a least square method by calculating the current frequency-dependent sound attenuation in the test body and shifting the measured values such that they lie distributed about an adapted curve with the smallest sum of the square flaw distances between the adapted curve and the measured values, the following values being used for the calculation according to the least square method:

    • n: number of measured values;
    • $s_i$: measured sound paths;
    • ri: dB values for the measured sound paths on the calculated cross bore curve;
    • $m_i$: measured amplitude values;
    • a: shall be the sound attenuation;
    • v: shall be the necessary shift in the y axis;

    the sum *f* of the square flaw distances being calculated by:

    $$f = \sum_{i=1}^{n} \left[ r_i - (m_i + 2as_i) + v \right]^2$$

    the two partial derivatives are calulated and equated to zero:

    $$\frac{\partial f}{\partial v} = 0$$

    $$\frac{\partial f}{\partial a} = 0 \tag{14}$$

yielding the following system of equations for calculating the necessary shift v and the sound attenuation:

$$
\begin{pmatrix} 2\sum\limits_{i=1}^{n} s_i & n \\ 2\sum\limits_{i=1}^{n} s_i^2 & \sum\limits_{i=1}^{n} s_i \end{pmatrix} \begin{pmatrix} a \\ v \end{pmatrix} = \begin{pmatrix} \sum\limits_{i=1}^{n} (r_i - m_i) \\ \sum\limits_{i=1}^{n} s_i (r_i - m_i) \end{pmatrix}
$$

$$(15)$$

2. The device (1) according to claim 1, **characterized in that** the device (1) is configured to vary the insonification angle $\Theta$, preferably electronically.

3. The device according to claim 2, **characterized in that** the evaluation unit (40) is further configured to take into account the influence of a possible change of a delay distance in the test probe (10) in the case of a change of the insonification angle $\Theta$ on the insonification angle-specific DAC curve.

4. The device (1) according to any preceding claim, **characterized in that** the control unit (20) is arranged to control the ultrasonic test proble (10) to generate ultrasonic pulses having a certain polarization P.

5. The device (1) according to any preceding claim, **characterized in that** the test probe (10) is configured, if necessary in cooperation with the control unit (20), to generate a sound field that is rotationally symmetric in the test object (100).

6. The device (1) according to any preceding claim, **characterized in that** the evaluation unit (40) is configured for determining a factor F for the frequency-dependent sound attenuation in the material of the test object (100) from at least two echo signals, which are received from the reference body, of identical reference reflectors that have different distances from the ultrasonic test probe (10).

7. A method for the non-destructive testing of a test object (100) by means of ultrasound, the method being configured for characterizing flaws or discontinuities (99) in the material of the test object (100) in accordance with the reference body method, wherein the method comprises the following method steps:

   a. generating and coupling ultrasonic pulses with a certain bandwidth B into a reference body in oblique insonification at an insonification angle $\Theta$, the reference body consisting of a material that is identical with or acoustically equivalent to the material of the test object (100) and comprises at least one reference reflector with a known geometry,
   b. recording of echo signals from the reference body that stem from the reference reflector, and
   c. processing recorded echo signals from the test object (100) in such a way that an insonification angle-specific DAC curve is determined on the basis of a general DAC curve in which gain is plotted as a function of the travel time required to bring the echo signals of identical reference reflectors situated at different depths to a predetermined echo indication height specific to the ultrasonic test probe (10), the acoustic properties of the material of the test object (100) and the reference body and the insonification angle $\Theta$,
   wherein in order to determine the insonification angle-specific DAC curve, the evaluation unit (40) is configured for carrying out a calibration by adapting measured values of a plurality of identical cross bores which have different distances from the test probe (10) and are measured for a fixed insonification angle using a least square method by calculating the current frequency-dependent sound attenuation in the test body and shifting the measured values such that they lie distributed about an adapted curve with the smallest sum of the square flaw distances between the adapted curve and the measured values, the following values being used for the calculation according to the least square method:

   • n: number of measured values;
   • $s_i$: measured sound paths;
   • $r_i$: dB values for the measured sound paths on the calculated cross bore curve;
   • $m_i$: measured amplitude values;
   • a: shall be the sound attenuation;
   • v: shall be the necessary shift in the y axis;

the sum $f$ of the square flaw distances being calculated by:

$$f = \sum_{i=1}^{n} \left[ r_i - (m_i + 2as_i) + v \right]^2$$

the two partial derivatives are calulated and equated to zero:

$$\frac{\partial f}{\partial v} = 0$$
$$\frac{\partial f}{\partial a} = 0 \qquad (14)$$

yielding the following system of equations for calculating the necessary shift v and the sound attenuation:

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n} (r_i - m_i) \\ \sum_{i=1}^{n} s_i (r_i - m_i) \end{pmatrix} \qquad (15)$$

8. The method according to claim 7, **characterized in that** a factor F for the frequency-dependent sound attenuation in the material of the test object (100) is determined from at least two echo signals, which are received from the test object (100), of identical reference reflectors that have different distances from the ultrasonic test probe (10).

**Patentansprüche**

1. Vorrichtung (1) zur zerstörungsfreien Prüfung eines Prüfobjekts (100) mittels Ultraschall, wobei die Vorrichtung (1) zur Charakterisierung von Fehlern oder Unstetigkeiten (99) im Material des Prüfobjekts (100) nach dem Bezugskörperverfahren konfiguriert ist, wobei die Vorrichtung (1) Folgendes umfasst:

a. eine Ultraschallprüfsonde (10) mit einem Ultraschallwandler (12) zum Erzeugen und Einkoppeln eines Ultraschallfeldes in das Prüfobjekt (100) bei schräger Beschallung unter einem Beschallungswinkel Θ und zum Aufzeichnen resultierender Echosignale von dem Prüfobjekt (100),
b. eine Steuereinheit (20) zum Steuern der Ultraschallprüfsonde (10) derart, dass diese Ultraschallimpulse mit einer bestimmten Bandbreite B erzeugt,
c. eine Empfangseinheit (30) zum Aufzeichnen von Echosignalen mittels der Ultraschallprüfsonde (10) und
d. eine Auswertungseinheit (40), die mit der Empfangseinheit (30) verbunden und zum Verarbeiten der aufgezeichneten Echosignale konfiguriert ist, wobei die Auswertungseinheit (40) dazu konfiguriert ist, eine winkelspezifische DAC-Kurve ("distance-amplitude-correction") für das Prüfobjekt (100) aus einer Vielzahl von Echosignalen identischer Bezugsreflektoren von einem Bezugskörper zu bestimmen, wobei der Bezugskörper aus einem Material besteht, das mit dem Material des Prüfobjekts (100) identisch oder akustisch äquivalent ist, wobei
e. die Auswertungseinheit (40) dazu konfiguriert ist, basierend auf einer allgemeinen DAC-Kurve, in der die Verstärkung als Funktion der Laufzeit aufgetragen ist, die erforderlich ist, um die Echosignale der sich in unterschiedlichen Tiefen befindenden identischen Bezugsreflektoren auf eine für die Ultraschallprüfsonde (10) spezifische vorbestimmte Echoanzeigehöhe zu bringen, den akustischen Eigenschaften des Materials des Prüfobjekts (100) und des Bezugskörpers sowie dem Beschallungswinkel O eine beschallungswinkelspezifische DAC-Kurve zu bestimmen, und
wobei die Auswertungseinheit (40) zum Bestimmen der beschallungswinkelspezifischen DAC-Kurve dazu konfiguriert ist, eine Kalibrierung durch Anpassen von Messwerten einer Vielzahl identischer Querbohrungen, die unterschiedliche Abstände zur Prüfsonde (10) aufweisen und für einen festen Beschallungswinkel gemessen werden, nach der Methode der kleinsten Quadrate durchzuführen, indem die aktuelle frequenzabhängige Schalldämpfung im Prüfkörper berechnet wird und die Messwerte so verschoben werden, dass sie verteilt um eine angepasste Kurve mit der kleinsten Summe der quadratischen Fehlerabstände zwischen der angepassten Kurve und den Messwerten liegen, wobei für die Berechnung nach der Methode der kleinsten Quadrate folgende Werte verwendet werden:

- $n$: Anzahl der Messwerte;
- $S_i$: gemessene Schallwege;
- $r_i$: dB-Werte für die gemessenen Schallwege auf der berechneten Querbohrungskurve;
- $m_i$: gemessene Amplitudenwerte;
- $a$: soll die Schalldämpfung sein;
- $v$: soll die erforderliche Verschiebung auf der y-Achse sein;

die Summe $f$ der quadratischen Fehlerabstände wird wie folgt berechnet:

$$f = \sum_{i=1}^{n} \left[ r_i - (m_i + 2as_i) + v \right]^2$$

die beiden partiellen Ableitungen werden berechnet und gleich null gesetzt:

$$\frac{\partial f}{\partial v} = 0$$
$$\frac{\partial f}{\partial a} = 0 \qquad (14)$$

woraus sich folgendes Gleichungssystem zur Berechnung der erforderlichen Verschiebung v und der Schalldämpfung ergibt:

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n} (r_i - m_i) \\ \sum_{i=1}^{n} s_i (r_i - m_i) \end{pmatrix} \qquad (15).$$

2. Vorrichtung (1) nach Anspruch 1, **dadurch gekennzeichnet, dass** die Vorrichtung (1) so konfiguriert ist, dass sie den Beschallungswinkel Θ variiert, vorzugsweise elektronisch.

3. Vorrichtung nach Anspruch 2, **dadurch gekennzeichnet, dass** die Auswertungseinheit (40) ferner dazu konfiguriert ist, den Einfluss einer möglichen Änderung einer Verzögerungsdistanz in der Prüfsonde (10) im Falle einer Änderung des Beschallungswinkels O auf die beschallungswinkelspezifische DAC-Kurve zu berücksichtigen.

4. Vorrichtung (1) nach einem der vorstehenden Ansprüche, **dadurch gekennzeichnet, dass** die Steuereinheit (20) dazu angeordnet ist, die Ultraschallprüfsonde (10) so zu steuern, dass sie Ultraschallimpulse mit einer bestimmten Polarisation P erzeugt.

5. Vorrichtung (1) nach einem der vorstehenden Ansprüche,

**dadurch gekennzeichnet, dass** die Prüfsonde (10) dazu konfiguriert ist, ggf. im Zusammenwirken mit der Steuereinheit (20), ein rotationssymmetrisches Schallfeld im Prüfobjekt (100) zu erzeugen.

6. Vorrichtung (1) nach einem der vorstehenden Ansprüche,
**dadurch gekennzeichnet, dass** die Auswertungseinheit (40) dazu konfiguriert ist, einen Faktor F für die frequenzabhängige Schalldämpfung im Material des Prüfobjekts (100) aus mindestens zwei vom Bezugskörper empfangenen Echosignalen identischer Bezugsreflektoren, die unterschiedliche Abstände zur Ultraschallprüfsonde (10) aufweisen, zu bestimmen.

7. Verfahren zur zerstörungsfreien Prüfung eines Prüfobjekts (100) mittels Ultraschall, wobei das Verfahren zur Charakterisierung von Fehlern oder Unstetigkeiten (99) im Material des Prüfobjekts (100) nach dem Bezugskörperverfahren konfiguriert ist, wobei das Verfahren folgende Verfahrensschritte umfasst:

a. Erzeugen und Einkoppeln von Ultraschallimpulsen mit einer bestimmten Bandbreite B in einen Bezugskörper bei schräger Beschallung unter einem Beschallungswinkel $\Theta$, wobei der Bezugskörper aus einem Material besteht, das mit dem Material des Prüfobjekts (100) identisch oder akustisch äquivalent ist und mindestens einen Bezugsreflektor mit bekannter Geometrie umfasst,
b. Aufzeichnen von Echosignalen von dem Bezugskörper, die von dem Bezugsreflektor stammen, und
c. Verarbeiten von aufgezeichneten Echosignalen von dem Prüfobjekt (100) auf derartige Weise, dass eine beschallungswinkelspezifische DAC-Kurve basierend auf einer allgemeinen DAC-Kurve, in der die Verstärkung als Funktion der Laufzeit aufgetragen ist, die erforderlich ist, um die Echosignale der sich in unterschiedlichen Tiefen befindenden identischen Bezugsreflektoren auf eine für die Ultraschallprüfsonde (10) spezifische vorbestimmte Echoanzeigehöhe zu bringen, den akustischen Eigenschaften des Materials des Prüfobjekts (100) und dem Bezugskörper sowie dem Beschallungswinkel $\Theta$ bestimmt wird,
wobei die Auswertungseinheit (40) zum Bestimmen der beschallungswinkelspezifischen DAC-Kurve dazu konfiguriert ist, eine Kalibrierung durch Anpassen von Messwerten einer Vielzahl identischer Querbohrungen, die unterschiedliche Abstände zur Prüfsonde (10) aufweisen und für einen festen Beschallungswinkel gemessen werden, nach der Methode der kleinsten Quadrate durchzuführen, indem die aktuelle frequenzabhängige Schalldämpfung im Prüfkörper berechnet wird und die Messwerte so verschoben werden, dass sie verteilt um eine angepasste Kurve mit der kleinsten Summe der quadratischen Fehlerabstände zwischen der angepassten Kurve und den Messwerten liegen, wobei für die Berechnung nach der Methode der kleinsten Quadrate folgende Werte verwendet werden:

• n: Anzahl der Messwerte;
• $S_i$: gemessene Schallwege;
• $r_i$: dB-Werte für die gemessenen Schallwege auf der berechneten Querbohrungskurve;
• $m_i$: gemessene Amplitudenwerte;
• a: soll die Schalldämpfung sein;
• v: soll die erforderliche Verschiebung auf der y-Achse sein;

die Summe $f$ der quadratischen Fehlerabstände wird wie folgt berechnet:

$$f = \sum_{i=1}^{n} \left[ r_i - (m_i + 2as_i) + v \right]^2$$

die beiden partiellen Ableitungen werden berechnet und gleich null gesetzt:

$$\frac{\partial f}{\partial v} = 0$$

$$\frac{\partial f}{\partial a} = 0 \qquad (14)$$

woraus sich folgendes Gleichungssystem zur Berechnung der erforderlichen Verschiebung v und der Schall-dämpfung ergibt:

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n}(r_i - m_i) \\ \sum_{i=1}^{n} s_i(r_i - m_i) \end{pmatrix}$$

(15).

8.  Verfahren nach Anspruch 7, **dadurch gekennzeichnet, dass** ein Faktor F für die frequenzabhängige Schalldämpfung im Material des Prüfobjekts (100) aus mindestens zwei vom Prüfobjekt (100) empfangenen Echosignalen identischer Bezugsreflektoren, die unterschiedliche Abstände zur Ultraschallprüfsonde (10) aufweisen, bestimmt wird.

**Revendications**

1.  Dispositif (1) pour le test non destructif d'un objet de test (100) au moyen d'ultrasons, le dispositif (1) étant conçu pour la caractérisation de défauts ou de discontinuités (99) dans le matériau de l'objet de test (100) conformément au procédé de corps de référence, dans lequel le dispositif (1) comprend ce qui suit :

    a. un capteur de test ultrasonique (10) avec un transducteur ultrasonique (12) pour la génération et le couplage d'un champ ultrasonique dans l'objet de test (100) en insonification oblique à un angle d'insonification O et pour l'enregistrement de signaux d'écho résultants provenant de l'objet de test (100),
    b. une unité de commande (20) pour la commande du capteur de test ultrasonique (10) de manière à ce que ce dernier génère des impulsions ultrasoniques avec une certaine largeur de bande B,
    c. une unité de réception (30) pour l'enregistrement de signaux d'écho au moyen du capteur de test ultrasonique (10), et
    d. une unité d'évaluation (40), qui est connectée à l'unité de réception (30) et conçue pour le traitement des signaux d'écho enregistrés, dans lequel l'unité d'évaluation (40) est conçue pour déterminer une courbe DAC (« distance-amplitude-correction ») spécifique à l'angle pour l'objet de test (100) à partir d'une pluralité de signaux d'écho de réflecteurs de référence identiques provenant d'un corps de référence, dans lequel le corps de référence est constitué d'un matériau qui est identique ou acoustiquement équivalent au matériau de l'objet de test (100), dans lequel
    e. l'unité d'évaluation (40) est conçue pour déterminer, en fonction d'une courbe DAC générale dans laquelle un gain est représenté en fonction du temps de parcours nécessaire pour amener les signaux d'écho des réflecteurs de référence identiques situés à différentes profondeurs à une hauteur d'indication d'écho prédéterminée spécifique au capteur de test ultrasonique (10), aux propriétés acoustiques du matériau de l'objet de test (100) et du corps de référence et à l'angle d'insonification O, une courbe DAC spécifique à l'angle d'insonification, et
    dans lequel afin de déterminer la courbe DAC spécifique à l'angle d'insonification, l'unité d'évaluation (40) est conçue pour effectuer un étalonnage en adaptant des valeurs mesurées d'une pluralité d'alésages transversaux identiques qui ont différentes distances par rapport au capteur de test (10) et sont mesurées pour un angle d'insonification fixe à l'aide d'un procédé des moindres carrés en calculant l'atténuation sonore actuelle dépendant de la fréquence dans le corps de test et en décalant les valeurs mesurées de telle sorte qu'elles sont réparties autour d'une courbe adaptée avec la plus petite somme des distances de défaut quadratique entre la courbe adaptée et les valeurs mesurées, les valeurs suivantes étant utilisées pour le calcul selon le procédé des moindres carrés :

    •  n : nombre de valeurs mesurées ;
    •  Si : trajets sonores mesurés ;
    •  $r_i$ : valeurs en dB pour les trajets sonores mesurés sur la courbe d'alésage transversal calculée ;
    •  $m_i$ : valeurs d'amplitude mesurées ;
    •  a : est l'atténuation sonore ;

• v : est le décalage nécessaire sur l'axe des y ;

la somme *f* des distances de défaut quadratiques étant calculée par :

$$f = \sum_{i=1}^{n} \left[ r_i - \left( m_i + 2as_i \right) + v \right]^2$$

les deux dérivées partielles sont calculées et égales à zéro :

$$\frac{\partial f}{\partial v} = 0$$

$$\frac{\partial f}{\partial a} = 0 \qquad (14)$$

ce qui donne le système d'équations suivant pour le calcul du décalage nécessaire v et l'atténuation sonore :

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n} (r_i - m_i) \\ \sum_{i=1}^{n} s_i (r_i - m_i) \end{pmatrix} \qquad (15).$$

2. Dispositif (1) selon la revendication 1, **caractérisé en ce que** le dispositif (1) est conçu pour faire varier l'angle d'insonification O, de préférence électroniquement.

3. Dispositif selon la revendication 2, **caractérisé en ce que** l'unité d'évaluation (40) est en outre conçue pour prendre en compte l'influence d'un changement possible d'une distance de retard dans le capteur de test (10) dans le cas d'un changement de l'angle d'insonification O sur la courbe DAC spécifique à l'angle d'insonification.

4. Dispositif (1) selon l'une quelconque revendication précédente, **caractérisé en ce que** l'unité de commande (20) est agencée pour commander le capteur de test ultrasonique (10) pour générer des impulsions ultrasoniques ayant une certaine polarisation P.

5. Dispositif (1) selon l'une quelconque revendication précédente, **caractérisé en ce que** le capteur de test (10) est conçu, si nécessaire en coopération avec l'unité de commande (20), pour générer un champ sonore qui est symétrique en rotation dans l'objet de test (100).

6. Dispositif (1) selon l'une quelconque revendication précédente, **caractérisé en ce que** l'unité d'évaluation (40) est conçue pour la détermination d'un facteur F pour l'atténuation sonore dépendant de la fréquence dans le matériau de l'objet de test (100) à partir d'au moins deux signaux d'écho, qui sont reçus à partir du corps de référence, de réflecteurs de référence identiques qui ont différentes distances par rapport au capteur de test ultrasonique (10).

7. Procédé de test non destructif d'un objet de test (100) au moyen d'ultrasons, le procédé étant conçu pour la caractérisation de défauts ou de discontinuités (99) dans le matériau de l'objet de test (100) conformément au procédé de corps de référence, dans lequel le procédé comprend les étapes de procédé suivantes :

    a. la génération et le couplage d'impulsions ultrasoniques avec une certaine largeur de bande B dans un corps de référence en insonification oblique à un angle d'insonification O, le corps de référence étant constitué d'un matériau qui est identique ou acoustiquement équivalent au matériau de l'objet de test (100) et comprend au moins un réflecteur de référence avec une géométrie connue,

b. l'enregistrement de signaux d'écho du corps de référence qui proviennent du réflecteur de référence, et

c. le traitement de signaux d'écho enregistrés de l'objet de test (100) de manière à ce qu'une courbe DAC spécifique à l'angle d'insonification soit déterminée en fonction d'une courbe DAC générale dans laquelle un gain est représenté en fonction du temps de parcours nécessaire pour amener les signaux d'écho de réflecteurs de référence identiques situés à différentes profondeurs à une hauteur d'indication d'écho prédéterminée spécifique au capteur de test ultrasonique (10), aux propriétés acoustiques du matériau de l'objet de test (100) et du corps de référence et à l'angle d'insonification O,

dans lequel afin de déterminer la courbe DAC spécifique à l'angle d'insonification, l'unité d'évaluation (40) est conçue pour effectuer un étalonnage en adaptant des valeurs mesurées d'une pluralité d'alésages transversaux identiques qui ont différentes distances par rapport au capteur de test (10) et sont mesurées pour un angle d'insonification fixe à l'aide d'un procédé des moindres carrés en calculant l'atténuation sonore actuelle dépendant de la fréquence dans le corps de test et en décalant les valeurs mesurées de telle sorte qu'elles sont réparties autour d'une courbe adaptée avec la plus petite somme des distances de défaut quadratique entre la courbe adaptée et les valeurs mesurées, les valeurs suivantes étant utilisées pour le calcul selon le procédé des moindres carrés :

- $n$ : nombre de valeurs mesurées ;
- $S_i$ : trajets sonores mesurés ;
- $r_i$ : valeurs en dB pour les trajets sonores mesurés sur la courbe d'alésage transversal calculée ;
- $m_i$ : valeurs d'amplitude mesurées ;
- $a$ : est l'atténuation sonore ;
- $v$ : est le décalage nécessaire sur l'axe des y ;

la somme $f$ des distances de défaut quadratiques étant calculée par :

$$f = \sum_{i=1}^{n} \left[ r_i - (m_i + 2as_i) + v \right]^2$$

les deux dérivées partielles sont calculées et égales à zéro :

$$\frac{\partial f}{\partial v} = 0$$

$$\frac{\partial f}{\partial a} = 0 \qquad (14)$$

ce qui donne le système d'équations suivant pour le calcul du décalage nécessaire v et l'atténuation sonore :

$$\begin{pmatrix} 2\sum_{i=1}^{n} s_i & n \\ 2\sum_{i=1}^{n} s_i^2 & \sum_{i=1}^{n} s_i \end{pmatrix} \begin{pmatrix} a \\ v \end{pmatrix} = \begin{pmatrix} \sum_{i=1}^{n} (r_i - m_i) \\ \sum_{i=1}^{n} s_i (r_i - m_i) \end{pmatrix} \qquad (15).$$

8. Procédé selon la revendication 7, **caractérisé en ce qu'**un facteur F pour l'atténuation sonore dépendant de la fréquence dans le matériau de l'objet de test (100) est déterminé à partir d'au moins deux signaux d'écho, qui sont reçus à partir de l'objet de test (100), de réflecteurs de référence identiques qui ont différentes distances par rapport au capteur de test ultrasonique (10).

Fig. 1

Fig. 2

Fig. 3

**Bildschirmkurve Querbohrung (2 MHz)**

Fig. 4

**AVG-Kurve für eine Querbohrung (2 MHz)**

Fig. 5

Bildschirmkurve Querbohrung (2 MHz)

Fig. 6

AVG-Kurve für eine Querbohrung (4 MHz)

Fig. 7

**AVG–Kurve für eine Querbohrung (4 MHz)**

Fig. 8

**Bildschirmkurve Querbohrung: 4 MHz, 70 °, 14.7 dB/m**

Fig. 9

**Querbohrungskurve im Fernfeld (4 MHz, 53°)**

Fig. 10

**Querbohrungskurve (Least Square Methode)**
**2 MHz, 53°**

Fig. 11

**Querbohrungskurve (Least Square Methode)**
**4 MHz, 53°**

Fig. 12

**Querbohrunskurven für alle Winkel:**
**2 MHz, Basismessung für: 53°**

Fig. 13

Fig. 14

(a) Basismessung bei 53°

(b) Querbohrungskurve für 45°

(c) Querbohrungskurve für 60°

(d) Querbohrungskurve für 70°

Fig. 15

(a) Basismessung bei 53°

(b) Querbohrungskurve für 45°

(c) Querbohrungskurve für 60°

(d) Querbohrungskurve für 70°

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130291640 A1
- US 2012024067 A1
- US 4462082 A
- US 5511425 A
- US 3908439 A
- US 3724262 A
- WO 2010130819 A1
- DE 102014101230

### Non-patent literature cited in the description

- **DEUTSCH et al.** *Fehlernachweis und Geräteiustierung*
- **KRAUTKRÄMER J. ; KRAUTKRÄMER H.** Werkstoffprüfung mit Ultraschall. Springer Verlag, 1986
- **KRAUTKRÄMER J. ; KRAUTKRÄMER H.** Werkstoffprüfung mit Ultraschall. Springer Verlag, 1986, 50
- **KRAUTKRÄMER J. ; KRAUTKRÄMER H.** Werkstoffprüfung mit Ultraschall. Springer Verlag, 1986, 75